# EUROPÄISCHE PATENTANMELDUNG

(11) **EP 2 099 007 A2**
(43) Veröffentlichungstag der Anmeldung: **09.09.2009**
(21) Anmeldenummer: 08020814.3
(22) Anmeldetag: 01.12.2008
(51) Int. Cl.: G09B 21/00

(54) **Display für braille-codierte informationen**

(30) Priorität: 07.03.2008 AT 3742008
(71) Anmelder: Kantner, Ewald, 4232 Hagenberg (AT)
(72) Erfinder: Kantner, Ewald, 4232 Hagenberg (AT)

(57) **Zusammenfassung**

Die Erfindung betrifft ein Display für das Lesen von Zeichenfolgen in braillecodierter Darstellung an einer Zeile, welche aus mehreren nebeneinander angeordneten Braille-Lesezellen gebildet ist. Das Display umfasst mehreren Lesemodule (1, 11) welche jeweils mindestens eine Zeile von Lesezellen (1.1) aufweisen und miteinander wiederholt mechanisch und elektrisch lösbar verbindbar sind. Dadurch kann die Größe des Displays an das jeweils vorhandene Platzangebot bzw. an den jeweils gewünschten Lesekomfort angepasst werden.

## Beschreibung

Die Erfindung betrifft ein Display für das Lesen von Information in braille-codierter Darstellung.

Die veränderbare Ausgabe von Zeichen, welche für Blinde lesbar sein sollen, aus einem elektronischen Gerät erfolgt im Normalfall in Form von tastbaren Zeichen in Braillecodierung. Ein darauf basierendes Gerät weist üblicherweise eine Reihe von nebeneinander angeordneten, tastbaren Zellen - im Folgenden "Lesezellen" genannt - auf, welche unterschiedliche fühlbare Reize erzeugen können und damit dem Lesen von Zeichen dienen, sowie eine Gruppe von drückbaren Tastschaltern, welche der Eingabe von Zeichen dienen, sowie mehrere Steuertasten, welche vorwiegend zum Bewegen in einem zu lesenden oder zu schreibenden Dokument dienen. Oft weisen derartige Geräte auch noch eine Ablagefläche und eine Andockmöglichkeit für einen Notebook-Computer auf. Die WO 2004 013827 A2 zeigt ein Gerät dieser Art, wobei auch Lese- und Schreibteil als jeweils eigenständiges Module aufgebaut sind, welche lösbar miteinander verbindbar sind.

Die DE 102 10 000 A1 beschreibt ein Braille-Zeilen-Tablett. Dies ist eine Fläche, typischerweise etwa im Format A4, auf welcher einige Zeilen von nebeneinander angeordneten Lesezellen untereinander angeordnet sind. Auf dem Tablett werden Zeichenfolgen, welche an einer mit dem Tablett in Verbindung stehenden Tastatur eingegeben wurden, Zeile für Zeile dargestellt. Damit kann eingegebener Text, welcher auch schon mehrer Zeilen zurückliegen kann, noch im Nachhinein kontrolliert werden, ohne dass die Darstellung in der aktuellen, letzten Zeile geändert werden muss.

Der Erfinder hat es als störend erkannt, dass die zum Lesen in Braillecodierung dienenden Geräte - des weiteren "Display" genannt - "monolithisch", also unveränderbar in einem einzigen Stück aufgebaut sind. Wenn man sowohl an einem dauerhaften stationären Arbeitsplatz komfortabel arbeiten möchte, als auch die Möglichkeit haben will unterwegs an Orten zu arbeiten an denen man weniger Platz hat, braucht man daher zwei Displays, eines mit vielen Lesezellen und damit großer Breite und ein schmäleres, leichter zu transportierendes Display mit einer geringeren Anzahl von nebeneinander angeordneten Lesezellen.

Die der Erfindung zu Grunde liegende Aufgabe besteht daher darin, ein Display für das Lesen von Information in braillecodierter Darstellung bereitzustellen, welches flexibel an verschiedene Anwendungsfälle anpassbar ist, wie insbesondere komfortables Arbeiten durch eine große Anzahl von nebeneinander angeordneten Lesezellen und gute Transportierbarkeit durch kurze Lesezeilenlänge und damit geringe Anzahl von nebeneinander angeordneten Lesezellen.

Zum Lösen der Aufgabe wird vorgeschlagen, ein Display modular aus miteinander lösbar verbindbaren Lesemodulen, also Modulen auf welchen jeweils mehrere Lesezellen nebeneinander angeordnet sind, zu bilden.

Zur näheren Erläuterung dienen die Zeichnungen:
- Fig. 1:: zeigt zwei zusammengesteckte Lesemodule 1 und ein daran angestecktes Eingabemodul 2 von oben.
- Fig. 2:: zeigt eine beispielhafte Anordnung aus einem Steuergerät 6 und zwei Lesemodulen 1 die gemeinsam zwischen zwei Steuerwippen 7 angeordnet sind.
- Fig. 3:: veranschaulicht eine erste Verbindungsmethode für zwei stirnseitig miteinander verbundene Lesemodule 1 in einer Teilschnittansicht.
- Fig. 4:: zeigt mit Blickrichtung von unten den Verbindungsbereich zwischen zwei erfindungsgemäß entsprechend einer zweiten Verbindungsmethode miteinander verbundenen Modulen.
- Fig. 5:: zeigt die Schnittebene "A-A" von Fig. 4.
- Fig. 6:: zeigt einen Schieber, welcher an der Verbindungsmethode gemäß Fig. 4 und Fig. 5 mitwirkt.

Die einzelnen Lesezellen 1.1 von Lesemodulen 1, 11 weisen üblicherweise acht Punkte auf, welche in zwei Viererreihen nebeneinander angeordnet sind und mit elektromechanischen Mitteln einzeln dazu angeregt werden können, einen fühlbaren Reiz abzugeben. Dazu weist jede Lesezelle im Normalfall auch eine - des weiteren als "Cursorrouting-Taste" oder abgekürzt "CR" bezeichnete Schaltfläche auf mittels derer durch Druck ein Signal erzeugt werden kann, welches durch die verknüpfende Steuerung der einzelnen Lesezelle zugeordnet wird und beispielsweise bewirkt, dass ein Cursor innerhalb eines Textes genau zu jenem Zeichen springt, welches durch die betreffende Lesezelle gerade angezeigt wird.

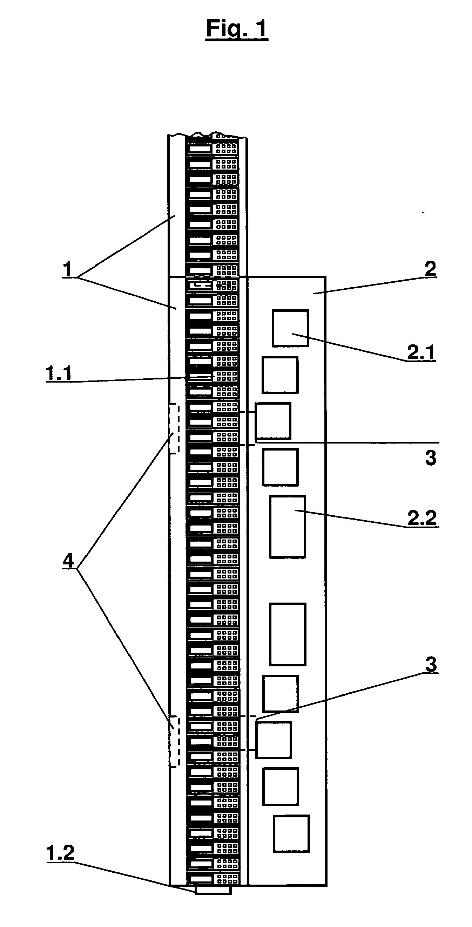

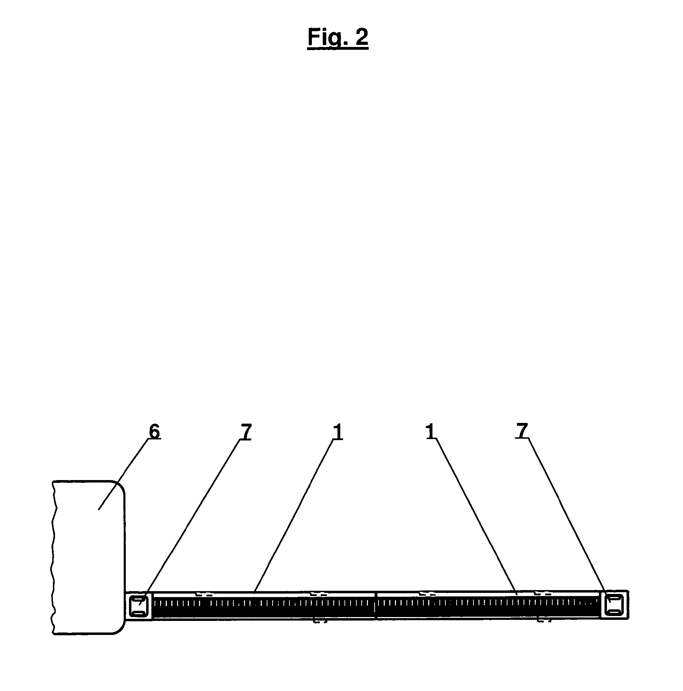

Es ist besonders vorteilhaft, Lesemodule 1, 11 - wie in Fig. 1 und Fig. 2 dargestellt - nebeneinander, also Stirnseite an Stirnseite miteinander verbindbar zu machen. Damit werden die aus mehreren nebeneinander angeordneten Lesezellen 1.1 bestehenden Zeilen der einzelner Lesemodule zu einer gemeinsamen, längeren Zeile vereinigt. Bei einer typischen Zeilenlänge eines Lesemoduls von zwanzig Lesezellen 1.1 ist die so aus zwei Lesemodulen gebildete Zeile mit einer Länge von vierzig Lesezellen mit zwei Händen besser zu ertasten als zwei untereinander angeordnete Zeilen mit jeweils zwanzig Lesezellen. Wenn an einzelnen Arbeitsplätzen die Breite des so gebildeten Displays stört, kann man ja ein Lesemodul wegnehmen. Die mechanisch miteinander verbundenen einzelnen Module sind natürlich auch elektrisch, am besten mittels Steckverbindungen 1.2, 11.2 zu verbinden. Am besten sind diese Steckverbindungen so angeordnet, dass sie in einer Bewegung mit dem Herstellen bzw. Lösen der mechanischen Verbindung zwischen Modulen hergestellt bzw. gelöst werden.

Wie in Fig. 1 dargestellt, sollten Lesemodule 1 auch längsseitig mit Steckverbindungen 3, 4 versehen sein. In dem in Fig. 1 dargestellten Beispiel verbindet die Steckverbindung 3 ein Eingabemodul 2 und ein Lesemodul 1. Vorzugsweise sind zwei Steckverbindungen 3 vorgesehen und ein Viertel der Länge von der Stirnseite des Lesemoduls her eingerückt. Dadurch kann das Schreibmodul 2 sowohl genau an einem Lesemodul 1 angesteckt werden als auch symmetrisch an zwei nebeneinander angeordneten Lesemodulen. Für das Andocken einer Andockstelle zu einem Steuergerät - wie typischerweise einem Notebook-Computer - können die Steckverbindungen 4 gemäß Fig. 1 dienen. Bezüglich ihrer Anordnung gelten die gleichen Überlegungen wie für die Steckverbindungen 3.

Wenn die beiden Steckverbindungen 3 und 4 zueinander komplementär und am gleichen Längsabschnitt des Lesemoduls angeordnet sind, so können damit auch zwei Lesemodule untereinander angeordnet werden, sodass damit zwischen den Lesemodulen nicht die Zeilenlänge addiert wird, sondern die Anzahl der Zeilen.

Das Eingabemodul 2 gemäß Fig. 1 weist acht Schaltflächen 2.1 auf. Unterschiedliche Kombinationen von gedrückten derartigen Schaltflächen bedeuten entsprechend Braillecodierung unterschiedliche Zeichen, welche auf diese Weise eingegeben werden. Mit Steuerflächen 2.2 können zusätzliche Befehle, wie typischerweise "Enter" eingegeben werden.

Die beispielhaften Module 7 gemäß Fig. 2 sind sogenannte Navigationswippen. Diese weisen eine Schaltfläche auf, welche unterscheidbare Signale liefert, je nachdem ob sie am oberen Rand, am unteren Rand oder in der Mitte gedrückt wird. Oberer und unterer Rand werden typischerweise zum Bewegen in einem Text verwendet, die Mitte kann beispielsweise "Enter" bedeuten.

Natürlich bedarf es eines Kommunikationsprotokolls für die einzelnen miteinander verbunden Module, welches mit der variierbaren Anzahl von miteinander verbunden Modulen zurechtkommt. Ein derartiges Kommunikationsprotokoll könnte für eine beispielhafte Anordnung bei welcher Module in einer Reihe hintereinander angeordnet sind und das Modul "Steuergerät" - beispielsweise ein PC - ganz links angeordnet ist, beispielsweise folgendermaßen aufgebaut sein:
Jeder Block nimmt Befehle zur Brailleausgabe, also zur Ausgabe von Zeichen von dem Modul links davon entgegen und leitet sie ganz oder in Zeilen an das Modul rechts davon weiter.
Jedes Modul nimmt Tastendrücke, Cursorrouting, Akkustand etc. von dem Modul rechts davon entgegen, verändert sie falls notwendig, und leitet sie an das Modul links davon weiter.
Das ganz links angeordnete Steuergerät braucht nur die Information zu haben, wie lang die Lesezeile insgesamt ist.
Am Beispiel des linearen Aufbaus von links nach rechts gemäß Fig. 2 bestehend aus Steuergerät 6, Navigationswippe 7, zwei Lesemodule 1 (mit jeweils zwanzig Lesezellen), Navigationswippe 7 kann das beispielsweise bedeuten:
   - Einschalten: Nach dem Einschalten schickt das rechte Lesemodul 1 die Information "zwanzig Zeichen" an das links benachbarte Modul. Das linke Lesemodul 1 erhält damit diese Information, addiert die eigene Länge hinzu, und sendet die Information "vierzig Zeichen" weiter nach links. Die linke Navigationswippe 7 verfügt über keine Brailleausgabe, sie leitet die Information unverändert an das Steuergerät weiter. Das Steuergerät erhält so die Information über die Gesamtlänge der Zeile.
   - Das Steuergerät sendet eine Textnachricht mit vierzig Zeichen an die linke Navigationswippe 7. Diese verfügt über keine Brailleausgabe, sie leitet die Information daher unverändert an das erste Lesemodul 1 weiter. Dieses weist zwanzig Lesezellen auf, gibt daher die ersten zwanzig Zeichen der Textnachricht aus und leitet die restlichen zwanzig Zeichen an das Lesemodul rechts davon weiter. Dieses gibt die restlichen zwanzig Zeichen aus. Somit ist die ganze Textnachricht korrekt auf der Zeile ausgegeben.
   - Die Mittel-Taste der linken Navigationswippe 7 wird betätigt. Die Information "Taste links" wird direkt an das Steuergerät 6 übertragen.
   - Die Mittel-Taste der rechten Navigationswippe 7 wird betätigt. Die Navigationswippe überträgt die Information "Taste links" an das links von ihr liegende, rechte Lesemodul 1. Da sich die betreffende Navigationswippe auf der rechten Seite des Lesemoduls befindet, wird die Steuerinformation in "Taste rechts" umgewandelt, und an das linke Lesemodul weitergeleitet. Sowohl das linke Lesemodul als auch die linke Navigationswippe reichen die Information ohne Veränderungen weiter. Die Information "Taste rechts" kommt so am Steuergerät an.
   - Die Unten-Taste der rechten Navigationswippe 7 wird betätigt. Die Information "Taste rechts" wird von allen anderen Modulen unverändert nach links bis zum Steuergerät weitergereicht.
   - Die dreißigste Cursorrouting-Taste der aus den zwei Lesemodulen 1 gebildeten Lesezeile, das ist die zehnte CR-Taste auf dem rechten Lesemodul, wird betätigt. Das rechte Lesemodul 1 sendet die Information "CR-Taste 10" an das linke Lesemodul. Das linke Lesemodul addiert die eigene Länge (zwanzig Lesezellen) hinzu, und sendet die Information "CR-Taste 30" weiter nach links zur linken Navigationswippe 7. Diese leitet die Information "CR-Taste 30" unverändert weiter an das Steuergerät 6.

Natürlich ist eine Vielzahl anderer Möglichkeiten die einzelnen Module anzusteuern denkbar und mit steuerungstechnischen Mitteln im Rahmen des fachmännischen Handelns realisierbar.

Bei der bisher besprochen Methode wird vom Steuergerät immer die komplette Lesezeile als Ganzes angesprochen. Die einzelnen Module arbeiten bezüglich eigener Information wie ein allein mit dem Steuergerät verbundenes Teil. Bezüglich Information, welche von bzw. an andere Module zu übertragen ist nehmen sie aber eigenständig Veränderungen vor, durch welche mehrere Module gemeinsam vom Steuergerät so angesprochen werden können, als wären sie ein einziges, langes Modul.

Alternativ dazu ist es auch realisierbar, Informationen über den genaueren Aufbau der Anordnung aus mehreren Modulen an das Steuergerät weiterzuleiten und in diesem die Konfiguration zu speichern. Unter Verwendung von Adressierungen kann dann das Steuergerät die einzelnen Module explizit ansteuern bzw. von diesen mit unveränderter Information bedacht werden. Die Ansteuerung würde in diesem Fall z.B. über lineare Adressierung funktionieren. Alle Geräte hängen an einem Bussystem, über das Befehle einschließlich Adressinformation an alle Teilnehmer übertragen werden.

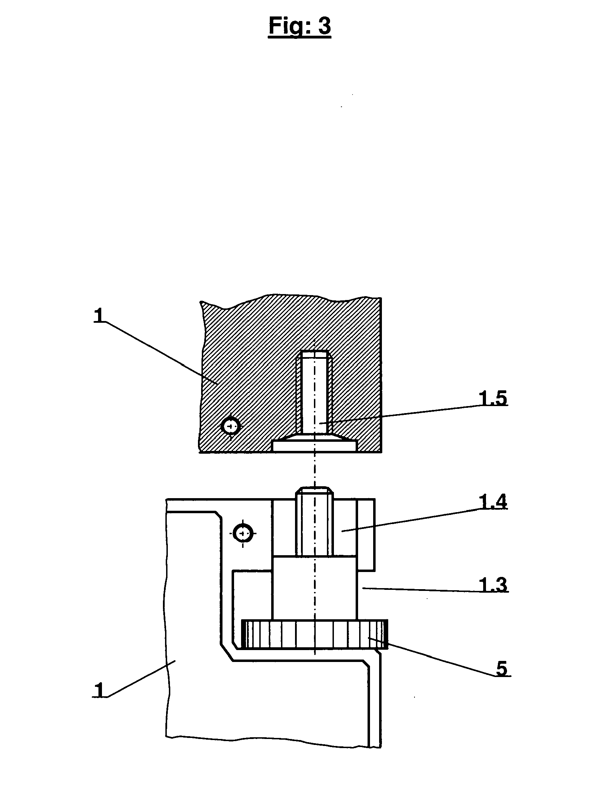

In Fig. 3 ist gezeigt, wie die lösbare mechanische Verbindung zwischen zwei Modulen, beispielsweise Lesemodulen 1 mittels Rändelschrauben 5 gebildet werden kann. In eine Ausnehmung nahe an einer erster Stirnseite von Modul 1 ist eine Rändelschraube 5 so eingesetzt ist, dass nur ein Teil des Kopfumfanges daraus hervorragt. Eine Schraubendurchgangsbohrung 1.4 verbindet die Ausnehmung 1.3 mit der Stirnseite des Moduls so, dass sie die Rändelschrauben axial führt. Ein komplementäres Mutterngewinde 1.5 ist an der zweiten, komplementären Stirnseite eines Moduls angebracht. Je Stirnfläche werden zwei Rändelschrauben bzw. Mutterngewinde vorgesehen. Die Verbindung mittels Rändelschrauben ist zwar nicht sehr komfortabel herzustellen bzw. zu lösen, dafür ist die Verbindung stabil und in gelöstem Zustand stehen kaum oder gar nicht Teile vor.

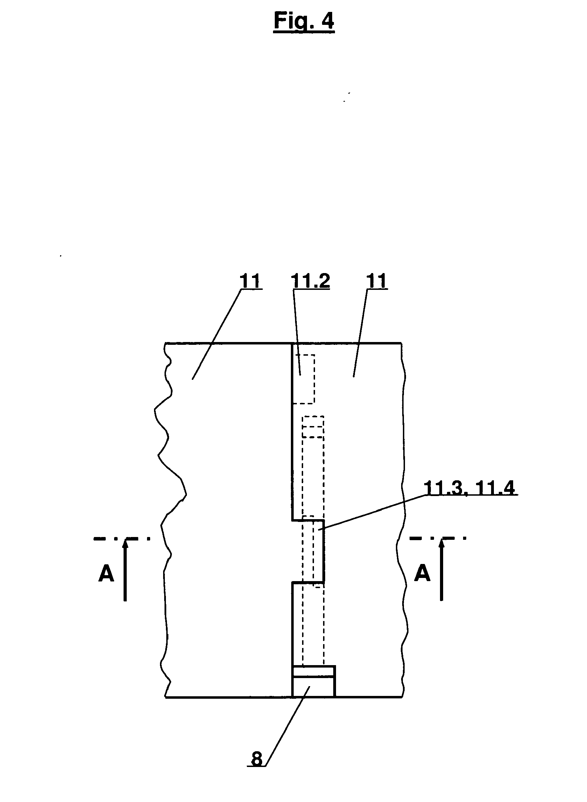

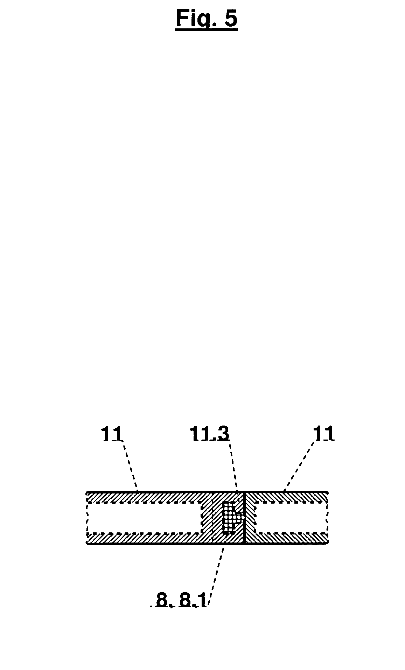

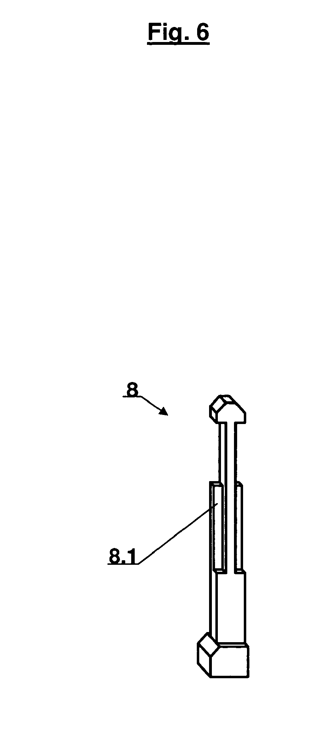

Fig. 4 bis Fig. 6 zeigen eine mechanische Verbindung zwischen den Stirnseiten benachbarter Module 11, welche auf Verhakung beruht. Von der dem linken Modul zugewandten Stirnseite des rechten Moduls aus stehen zwei Haken 11.3 in Richtung auf das rechte Modul ab und ragen in eine Ausnehmung 11.4 am Gehäuse des rechten Moduls. Normal zur Ebene der Haken 11.3 ist im rechten Gehäuse ein Schieber 8 linear beweglich durch die Ausnehmung 11.4 geführt und zwar derart, dass Wände 8.1 von ihm je nach Schieberstellung mit den Haken 11.3 in Eingriff gelangen oder nicht.

Darüber hinaus sind natürlich auch Schnappverbindungen sowie Kombinationen der beschriebenen Verbindungen denkbar. Auch Verbindungen unter Anwendungen von Kombinationen aus Rastflächen oder Steckverbindungen und Permanentmagneten sind durchaus denkbar.

Neben den schon erwähnten Modulen kommen an weiteren modular lösbar verbindbaren Funktionsmodulen beispielsweise noch in Betracht: Akkumulatoreinheit, Netzgerät, Schnittstelle für Bluetooth-Übertragung, Schnittstelle für Infrarot-Übertragung.

## Patentansprüche

1. Display für das Lesen von Zeichenfolgen in braillecodierter Darstellung an einer Zeile, welche aus mehreren nebeneinander angeordneten Braille-Lesezellen gebildet ist, **dadurch gekennzeichnet, dass** das Display mehreren Lesemodule (1, 11) umfasst, welche jeweils mindestens eine Zeile von Lesezellen (1.1) aufweisen und miteinander wiederholt mechanisch und elektrisch lösbar verbindbar sind.

2. Display nach Anspruch 1, **dadurch gekennzeichnet, dass** die mindestens eine Zeile eines Lesemoduls (1, 11) an beiden Seiten nahe an jeweils einer Stirnseite des Gehäuses des Lesemoduls endet und dass diese beiden Stirnseiten eine zueinander komplementäre Verbindungsgeometrie aufweisen.

3. Display nach Anspruch 1 oder 2, **dadurch gekennzeichnet, dass** die mechanische Verbindung zwischen zwei Lesemodulen aus einer Schraube (5) und einem damit korrespondierenden Mutterngewinde besteht.

4. Display nach Anspruch 1 oder 2, **dadurch gekennzeichnet, dass** die mechanische Verbindung zwischen zwei Lesemodulen aus einer Verhakung besteht.

5. Display nach Anspruch 5, **dadurch gekennzeichnet, dass** ein Haken (11.3) vom ersten Lesemodul in eine Ausnehmung (11.4) am zweiten Lesemodul ragt und am zweiten Lesemodul ein Schieber (8) beweglich geführt ist und eine Wand (8.1) dieses Schiebers durch Bewegung des Schiebers in der Führung mit dem Haken in bzw. außer Eingriff bringbar ist.

6. Display nach Anspruch 1 oder 2, **dadurch gekennzeichnet, dass** die mechanische Verbindung zwischen zwei Lesemodulen eine Schnappverbindung ist.

7. Display nach Anspruch 1 oder 2, **dadurch gekennzeichnet, dass** die mechanische Verbindung zwischen zwei Lesemodulen mittels Permanentmagnet in Kombination mit einer Rastverbindung und/oder Schnappverbindung und/oder Steckverbindung erfolgt.

8. Display nach einem der bisherigen Ansprüche, **dadurch gekennzeichnet, dass** mit den Lesemodulen auch Navigationsmodule (7) und/oder Steuermodule (6) und oder ein Akkumulator und/oder eine Funkschnittschnittstelle verbindbar sind, wobei die Verbindungsgeometrie gleich aufgebaut ist, wie zwischen zwei Lesemodulen.

9. Verfahren zum Betrieb eines aus mehreren, wiederholt lösbar miteinander verbindbaren Lesemodulen aufgebauten Displays, **dadurch gekennzeichnet, dass** die einzelnen Module die von einem an einer Seite benachbarten Modul empfangene Information an das Modul auf der gegenüberliegenden Seite durchleiten.

10. Verfahren nach Anspruch 9, **dadurch gekennzeichnet, dass** Lesemodule durchzuleitende Information verändern, wobei die Veränderung von der Anzahl der auf dem Modul vorhandenen Lesezellen abhängt.

11. Verfahren nach Anspruch 9, **dadurch gekennzeichnet, dass** Lesemodule durchzuleitende Information nicht verändern und dass die durchzuleitende Information eine Adressinformation enthält in welcher mitgeteilt wird, von welchem Modul eine Information an welches Modul gesendet wird.
